# FASCICULE DE BREVET EUROPEEN

(11) **EP 3 435 411 B1**
(45) Date de publication et mention de la délivrance du brevet: **24.03.2021**
(21) Numéro de dépôt: 18185059.5
(22) Date de dépôt: 23.07.2018
(51) Int. Cl.: H01L 23/58, H01L 21/768, H01L 23/48

(54) **PUCE ÉLECTRONIQUE PROTÉGÉE CONTRE DES ATTAQUES PIRATES DEPUIS LA FACE ARRIÈRE**
MIKROCHIP GESCHÜTZT GEGEN HACKERANGRIFFE VON DER RÜCKSEITE
MICROCHIP PROTECTED AGAINST HACKER ATTACKS FROM THE BACK SIDE

(30) Priorité: 27.07.2017 FR 1757142
(43) Date de publication de la demande: 30.01.2019
(73) Titulaire: STMicroelectronics (Crolles 2) SAS, 38920 Crolles (FR)
(72) Inventeur: PETITDIDIER, Sébastien, 38660 LA TERRASSE (FR)
(74) Mandataire: Cabinet Beaumont

(56) Documents cités:
- EP-A1- 2 866 259
- EP-A2- 1 427 007
- EP-A2- 3 086 368
- US-A1- 2007 045 780
- US-A1- 2010 155 796
- US-A1- 2010 187 525

## Description

### Domaine

La présente demande concerne les puces électroniques, plus particulièrement des puces électroniques protégées contre des attaques effectuées depuis la face arrière.

### Exposé de l'art antérieur

Des puces électroniques sont susceptibles de subir des attaques visant à déterminer le fonctionnement de la puce et à en extraire des informations confidentielles.

Un procédé de piratage des informations manipulées par des circuits intégrés consiste à graver la face arrière de la puce, par exemple par gravure chimique ou par polissage mécanochimique. Cela permet d'avoir accès à des parties actives de la puce, par exemple en creusant des cavités par faisceau d'ions pour y installer des contacts avec des composants situés en face avant. Lors d'une première phase de gravure, le pirate peut voir d'éventuels dispositifs de protection de la puce situés du côté de la face arrière et les démanteler avant le déclenchement de contre-mesures. Ces contre-mesures peuvent être par exemple la destruction des informations contenues dans la puce.

Le document EP 2866259 A1 décrit une puce électronique comprenant des moyens de protection de sa face arrière. Plus précisément, le document EP 2866259 A1 décrit une puce électronique comportant : un circuit électronique disposé au niveau d'une face avant d'un substrat ; un élément capacitif disposé au niveau d'une face arrière du substrat et en regard du circuit électronique, et relié électriquement au circuit électronique par une première et une deuxième liaisons électriques, la première liaison électrique comprenant un premier via électriquement conducteur traversant le substrat, le circuit électronique étant apte à mesurer la valeur de la capacité électrique de l'élément capacitif entre la première et la deuxième liaisons électriques, et au moins un deuxième via ou une tranchée traversant la face arrière du substrat et une partie de l'épaisseur du substrat, et disposé en regard du circuit électronique tel qu'une paroi de fond du deuxième via ou de la tranchée soit espacée du circuit électronique d'une distance non nulle.

Le document EP 3086368 A2 décrit une puce électronique comportant une face arrière protégée. Plus précisément, le document EP 3086368 A2 décrit une puce électronique (100) comportant au moins : un circuit électronique disposé au niveau d'une face avant d'un substrat ; une première couche de protection disposée sur une face arrière du substrat ; un élément résistif disposé sur la première couche de protection et en regard d'au moins une partie du circuit électronique, supporté mécaniquement par la première couche de protection et relié électriquement et/ou de manière inductive au circuit électronique ; une deuxième couche de protection recouvrant au moins l'élément résistif ; et dans laquelle la première couche de protection comporte au moins un matériau diélectrique présentant une résistance à une gravure chimique par au moins un agent de gravure chimique inférieure ou égale à celle d'un matériau diélectrique de la deuxième couche de protection.

### Résumé

Ainsi, un mode de réalisation selon l'invention prévoit une puce électronique selon la revendication 1 comprenant : des plots conducteurs situés sur la face avant d'un substrat de matériau semiconducteur ; des cavités creusées dans le substrat depuis la face arrière sensiblement plane de ce substrat, chaque cavité atteignant un plot conducteur ; une couche conductrice recouvrant les parois et le fond des cavités et comprenant des portions de couche conductrice s'étendant chacune, du côté de la face arrière, entre deux cavités, chaque portion de couche conductrice étant partiellement située sur une protubérance, chaque protubérance étant constitué d'une portion du substrat, la base de chaque protubérance étant incluse dans le plan de la face arrière du substrat, l'épaisseur de chaque protubérance étant comprise entre 5 et 10 fois l'épaisseur de la couche conductrice ; un matériau isolant remplissant les cavités et recouvrant la couche conductrice et la face arrière de la puce, le matériau isolant étant opaque et ayant une faible sélectivité de gravure par rapport au matériau de la couche conductrice ; et un circuit adapté à détecter une variation d'une caractéristique électrique mesurée entre deux plots.

Des modes de réalisation privilégiés sont décrits dans les revendications dépendantes.

Ainsi, selon un mode de réalisation, la longueur de chaque protubérance), c'est-à-dire la dimension de chaque protubérance dans une direction du plan de la face arrière du substrat, est approximativement comprise entre 10 % et 40 % de la distance séparant les cavités entre lesquelles la protubérance est située.

Selon un mode de réalisation, certaines portions de couche conductrice sont interrompues au niveau de la partie inférieure de la protubérance.

Selon un mode de réalisation, le circuit est adapté à mesurer la résistance entre des plots et chaque plot est directement connecté à la couche conductrice.

Selon un mode de réalisation, le circuit est adapté à mesurer la capacité entre les plots et chaque plot est séparé de la couche conductrice par une première couche de matériau isolant.

Un mode de réalisation selon l'invention prévoit un procédé de fabrication selon la revendication 6 d'une puce électronique selon la revendication 1 et telle que décrite précédemment, ce procédé comprenant : a) former des plots conducteurs (4, 6, 8) sur la face avant d'un substrat semiconducteur (2) ; b) graver, depuis la face arrière du substrat (2), des cavités en regard des plots conducteurs ; c) graver la face arrière du substrat (2) jusqu'à ce que les cavités atteignent les plots correspondants pour former des protubérances (14) entre des cavités, chaque protubérance (14) étant constitué d'une portion du substrat, la base de chaque protubérance étant incluse dans le plan de la face arrière du substrat ; d) recouvrir la face arrière du substrat (2) d'une couche conductrice (10), l'épaisseur de chaque protubérance étant comprise entre 5 et 10 fois l'épaisseur de la couche conductrice ; et e) graver la couche conductrice pour former des portions (16, 18) s'étendant chacune entre deux cavités, chaque portion étant partiellement située sur une protubérance (14), un matériau isolant (12) remplissant les cavités et recouvrant la couche conductrice (10) et la face arrière de la puce, le matériau isolant (12) étant opaque et ayant une faible sélectivité de gravure par rapport au matériau de la couche conductrice (10) .

Selon un mode de réalisation privilégié, l'étape e) de gravure de la couche conductrice comprend aussi la formation de portions de la couche conductrice qui sont interrompues au niveau de la protubérance.

Selon un autre mode de réalisation privilégié, une première couche de matériau isolant est déposée sur les parois et le fond des cavités entre les étapes c) et d).

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en coupe schématique d'une puce protégée contre des attaques par la face arrière ;
la figure 2 est une vue en coupe schématique d'un mode de réalisation d'une puce protégée contre des attaques par la face arrière ;
la figure 3 est une vue en coupe de la puce de la figure 2 après une gravure réalisée à partir de la face arrière ; et
les figures 4A à 4E sont des vues en coupe schématiques illustrant des étapes de fabrication de la puce de la figure 2.

### Description détaillée

De mêmes éléments ont été désignés par de mêmes références dans les différentes figures et, de plus, les diverses figures ne sont pas tracées à l'échelle. Par souci de clarté, seuls les éléments utiles à la compréhension des modes de réalisation décrits ont été représentés et sont détaillés. En particulier, le circuit de mesure d'une caractéristique électrique (capacité, résistance...) n'est pas représenté.

Dans la description qui suit, lorsque l'on fait référence à des qualificatifs de position absolue, tels que les termes "avant", "arrière", etc., ou relative, tels que les termes "supérieur", "inférieur", etc., ou à des qualificatifs d'orientation, tels que les termes "horizontal", "vertical", etc., il est fait référence à l'orientation des éléments concernés dans les figures. Sauf précision contraire, les expressions "approximativement" et "sensiblement" signifient à 10 % près, de préférence à 5 % près.

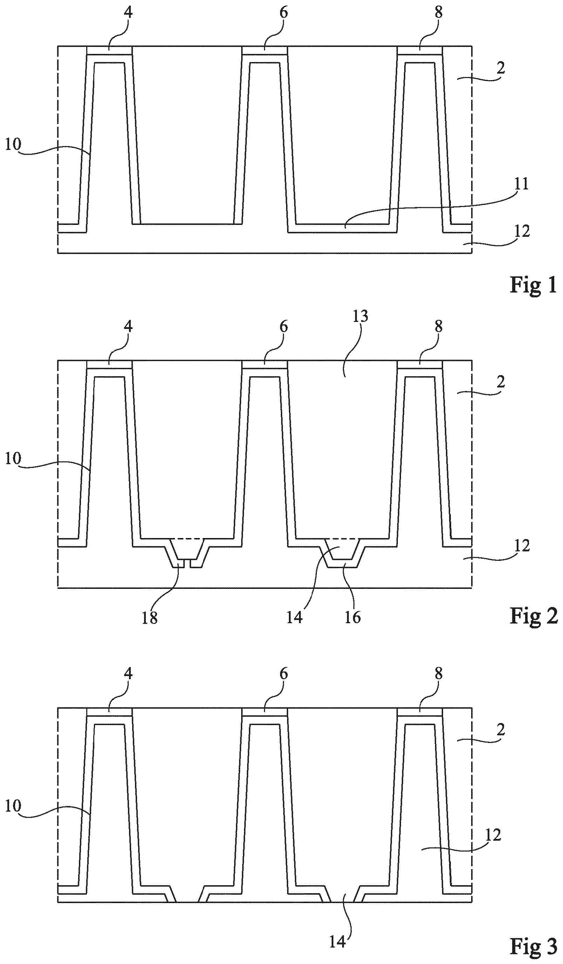

La figure 1 est une vue en coupe d'une puce protégée contre des attaques face arrière.

La puce comprend un substrat 2 de matériau semiconducteur, par exemple du silicium. Des plots conducteurs, dont trois, 4, 6 et 8, sont représentés en figure 1, sont situés sur la face avant du substrat 2. Le substrat 2 comprend aussi une cavité, ouverte depuis la face arrière, en regard de chaque plot conducteur 4, 6 et 8. Les plots conducteurs 4, 6 et 8 forment le fond des cavités correspondantes. Les parois et le fond des cavités sont recouverts d'une couche conductrice 10 dont des portions 11 s'étendent sur la face arrière. Les portions 11 de la couche conductrice 10 connectent certaines cavités deux à deux. En figure 1, les plots 6 et 8 sont directement connectées par une portion 11 de la couche conductrice 10. De même, le plot 4 est directement connecté à la couche conductrice 10 et est par exemple connecté à un plot conducteur non représenté.

La puce comprend de plus un circuit, non représenté, adapté à mesurer une caractéristique électrique entre deux plots conducteurs et à détecter une variation de cette caractéristique. Cette mesure peut s'effectuer de manière ponctuelle ou de manière continue. La caractéristique électrique est par exemple la résistance ou la capacité entre plots. Dans le cas où la caractéristique est la capacité, une couche de matériau isolant électriquement, non représentée, est située entre la couche conductrice 10 et les parois et les fonds des cavités de manière à former un condensateur entre chaque plot conducteur et la couche conductrice 10. Dans le cas où la caractéristique est la résistance, les plots sont directement connectés à la couche conductrice 10 comme cela est représenté en figure 1.

Une couche 12 de matériau isolant remplit les cavités et recouvre la couche conductrice 10 et la face arrière du substrat.

Si une portion conductrice de connexion 11 est détruite, par exemple par des attaques telles que celles décrites précédemment, la puce détecte une variation de la caractéristique mesurée entre les deux cavités correspondantes et déclenche une contre-mesure. Pour éviter cette contre-mesure, un pirate peut chercher à retirer la couche isolante 12 et à découvrir la couche 10 sans briser les connexions ou à reformer les connexions brisées avant d'activer la puce. Une gravure de la couche 12 de matériau isolant entraine le début de la gravure de la couche conductrice 10, une fois celle-ci atteinte. Cependant, la surface de chaque portion conductrice 11 est suffisamment grande pour que la portion ne soit pas entièrement gravée avant la détection de la couche conductrice 10 par le pirate et l'arrêt de la gravure. Ainsi, le pirate peut repérer, par des restes de couche conductrice 10, les connexions ayant été détruites et peut reconnecter les couches conductrices des cavités avant d'activer la puce. L'attaque ne sera alors pas détectée par le circuit de mesure.

La figure 2 est une vue en coupe, schématique, d'un mode de réalisation d'un dispositif de protection d'une puce contre les attaques par la face arrière. La figure 2 représente des éléments similaires à ceux de la figure 1 désignés par les mêmes références.

La figure 2 représente trois plots conducteurs 4, 6 et 8 sur la face avant du substrat 2 semiconducteur ainsi que les cavités correspondantes, comme cela a été décrit précédemment.

Les cavités délimitent dans le plan de la figure 2 des blocs 13 de substrat. Les blocs 13 contiennent par exemple du côté de leur face supérieure des composants actifs de la puce tels que des transistors, des condensateurs, etc. La face arrière de chaque bloc 13 est plane et est partiellement représentée en pointillés en figure 1. Des protubérances 14 sont situées sur la face arrière des blocs 13. Les protubérances 14 sont par exemple situées sensiblement au milieu des faces arrières des blocs 13. On définit la longueur de la protubérance par la longueur de la partie inférieure horizontale de la protubérance dans le plan de la figure 2, la partie inférieure de la protubérance étant la face opposée au substrat. Plus précisément, la longueur de la protubérance couverte par une partie de la couche conductrice s'étendant entre les deux cavités est la dimension de la protubérance dans la direction entre lesdites cavités. La longueur des protubérances est par exemple comprise entre 10 % et 40 % de la distance entre les cavités. La largeur de la protubérance, c'est-à-dire la dimension de la protubérance dans la direction orthogonale au plan de la figure 2, a une valeur supérieure ou égale à la longueur de la protubérance. Ces protubérances sont par exemple en le matériau du substrat 2.

A titre de variante ne faisant pas partie de l'invention revendiquée, les protubérances peuvent être en un matériau isolant, tel que l'oxyde de silicium ou le nitrure de silicium.

Les protubérances sont situées sur la face arrière du substrat. Plus précisément, les protubérances sont situées sur des portions de la face arrière du substrat entre des cavités adjacentes. Les portions de la face arrière du substrat sur lesquelles les protubérances sont situées sont par exemple sensiblement planes. Les dimensions de chaque protubérance dans un plan parallèle à la face arrière du substrat sont inférieures aux dimensions de la portion sur laquelle cette protubérance est située.

La couche conductrice 10 recouvre les parois et les fonds des cavités et des portions de la couche 10 s'étendent sur la face arrière du substrat 2 entre des cavités. Chaque portion de la couche 10 s'étendant entre les cavités est partiellement située sur une protubérance 14. Les portions de la couche 10 se divisent en deux catégories, représentées en figure 2 et désignées par les références 16 et 18.

La portion 16 de la couche 10 qui s'étend entre les cavités des plots 6 et 8 est continue et connecte électriquement les plots 6 et 8.

La portion 18 de la couche 10 qui s'étend entre les cavités des plots 4 et 6 est similaire à la portion située entre les plots 6 et 8, cependant elle est interrompue au niveau de la partie inférieure de la protubérance.

Un circuit, non représenté, adapté à mesurer une caractéristique électrique est connecté aux différents plots entre lesquels s'étendent des portions 16 et 18 de manière à détecter des variations de la valeur de la caractéristique mesurée. Par exemple, le circuit peut détecter l'interruption de la connexion électrique reliant les plots 6 et 8. Par exemple, le circuit peut aussi détecter si les plots 4 et 6, entre lesquels s'étend une portion 18 interrompue, sont connectés électriquement.

La puce peut en outre être recouverte en face arrière d'une couche isolante 12. La couche 12 est par exemple en un polymère opaque, de manière à rendre difficile voire impossible de distinguer les connexions entre les cavités sans retirer le polymère. Le polymère est par exemple opaque au visible et à l'infrarouge. Le polymère est par exemple aussi choisi de telle manière que les produits de gravure du polymère gravent rapidement la couche conductrice 10, ce qui empêche d'arrêter la gravure avant d'attaquer la couche conductrice.

Le substrat 2 peut, de plus, comprendre des plots conducteurs leurre non associés à une cavité et des cavités leurre non associées à un plot conducteur. Ces éléments leurre, non représentés, peuvent induire en erreur un pirate cherchant à comprendre le fonctionnement de la puce et son dispositif de protection contre des attaques par la face arrière.

La figure 3 illustre la puce de la figure 2 lors d'une attaque par la face arrière. Plus précisément, l'attaque subie par la puce consiste en une gravure plane de la face arrière.

Lors de l'attaque, la couche 12 d'isolant est gravée par exemple par gravure chimique. La partie de la couche conductrice 10 recouvrant la protubérance a une faible surface et n'est donc pas détectée immédiatement. De plus, le matériau de la couche 12 a par exemple été choisi pour que ses produits de gravure gravent rapidement le matériau de la couche 10. La partie de la couche 10 recouvrant la protubérance est gravée rapidement et entièrement avant la détection de la couche 10 par le pirate et l'arrêt de la gravure. Les connexions entre les plots conducteurs sont ainsi détruites et l'attaque est repérable lors de l'activation de la puce. En outre, les seuls éléments distinguant les portions continues 16 et les portions interrompues 18 sont situés sur les protubérances et sont gravés lors de l'attaque. Il n'est plus possible de distinguer les cavités entre lesquelles s'étend une portion de couche conductrice continue 16 et les cavités entre lesquelles s'étend une portion de la couche conductrice interrompue 18. Le pirate ne peut déterminer quelles cavités doivent être reconnectées pour éviter de déclencher les contre-mesures et quelles cavités ne doivent pas l'être.

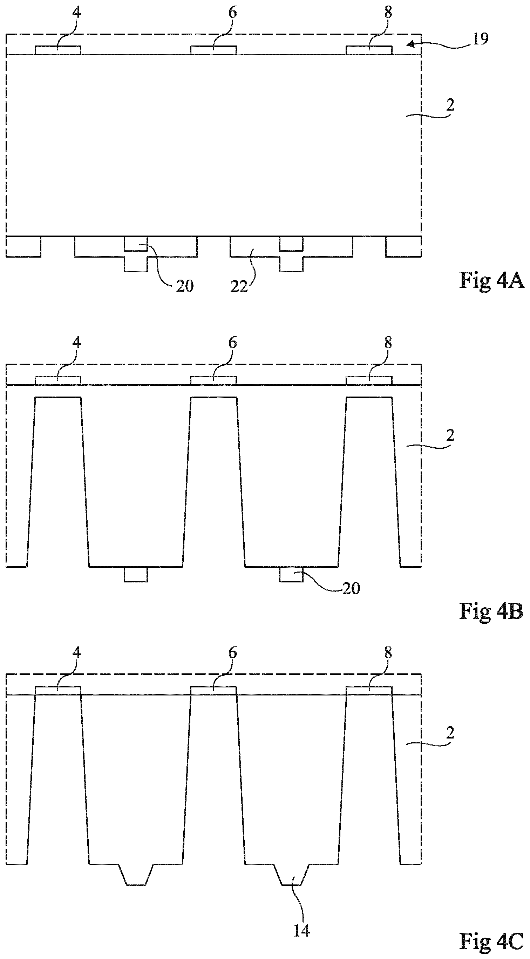

Les figures 4A à 4E illustrent des étapes de fabrication de la puce de la figure 2.

La figure 4A illustre une étape initiale de fabrication. La puce comprend un substrat 2 semiconducteur, par exemple en silicium et ayant une épaisseur par exemple comprise entre 150 et 200 µm. Des plots conducteurs 4, 6 et 8 correspondant par exemple à des métallisations du niveau inférieur d'une structure d'interconnexion 19, sont situés sur la face avant du substrat 2. Entre ces plots, des structures semiconductrices adéquates ont été préalablement formées.

Un premier masque 20 est formé sur la face arrière du substrat 2 aux emplacements où les protubérances seront situées. Le premier masque 20 est par exemple en oxyde de silicium ou en nitrure de silicium. Un second masque 22 est formé sur la face arrière. Le second masque 22 comprend des ouvertures au niveau des zones du substrat 2 où seront gravées les cavités, en regard des plots conducteurs.

A l'étape de la figure 4B, des cavités sont creusées en regard des plots conducteurs 4, 6 et 8 à travers les ouvertures du second masque 22. La gravure est arrêtée avant d'atteindre les plots conducteurs, par exemple à une distance comprise entre 1 et 10 µm des plots conducteurs. Le second masque 22 est ensuite retiré.

A l'étape de la figure 4C, le substrat 2 est gravé une nouvelle fois par la face arrière. Le substrat est gravé jusqu'à ce que les cavités atteignent les plots conducteurs et les parties de la face arrière protégées par le premier masque 20 constituent les protubérances 14. Le premier masque est ensuite retiré.

L'épaisseur des protubérances 14 est par exemple comprise entre 3 et 30 pm.

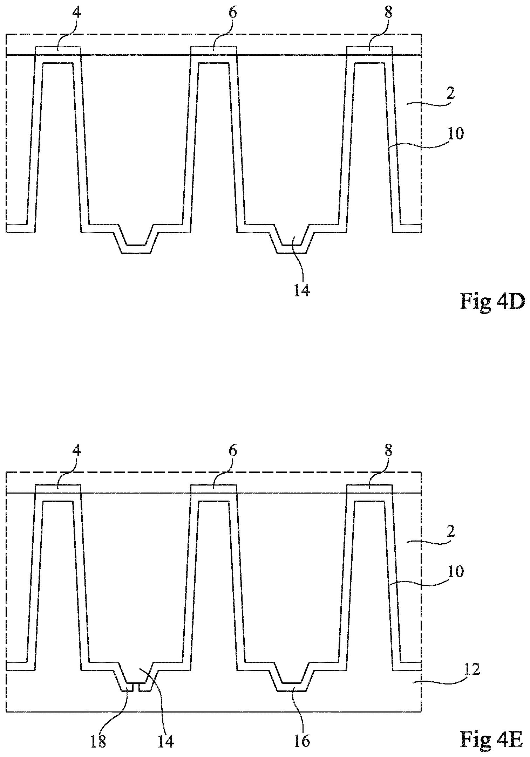

A l'étape de la figure 4D, une couche conductrice 10 est déposée sur l'ensemble de la face arrière de la puce, par exemple par dépôt physique par phase vapeur ou par dépôt électrochimique. Dans le cas d'une mesure de capacité, une couche de matériau isolant électriquement, non représentée, est formée sur les parois et les fonds des cavités avant la formation de la couche conductrice 10.

La couche 10 est déposée de manière uniforme. L'épaisseur de la couche conductrice 10 est par exemple comprise entre 0,1 et 3 pm. Plus généralement, l'épaisseur de chaque protubérance est par exemple comprise entre 5 et 10 fois l'épaisseur de la couche conductrice 10.

A l'étape de la figure 4E, la couche conductrice est retirée en des emplacements choisis, par exemple par gravure chimique, de la face arrière du substrat de manière à former des portions de couche conductrice 10 s'étendant entre des cavités. Les portions peuvent être des portions 16 continues ou des portions 18 interrompues au niveau de la protubérance 14 correspondante.

A titre de variante ne faisant pas partie de l'invention revendiquée, la protubérance 14 peut être en un matériau différent du matériau du substrat 2. La protubérance est par exemple en un matériau isolant tel que l'oxyde de silicium ou le nitrure de silicium. La protubérance 14 peut alors être formée par le premier masque 20. Le procédé ne comprend alors pas l'étape de la figure 4C, qui comprend le retrait du premier masque. La gravure des cavités effectuée à l'étape de figure 4B atteint les plots conducteurs.

Un avantage des procédés de fabrication décrit ici est qu'ils comprennent uniquement des étapes usuelles de fabrication. Ils sont peu coûteux.

## Revendications

1. Puce électronique comprenant :
des plots conducteurs (4, 6, 8) situés sur la face avant d'un substrat (2) de matériau semiconducteur ;
des cavités creusées dans le substrat (2) depuis la face arrière sensiblement plane de ce substrat (2), chaque cavité atteignant un plot conducteur (4, 6, 8) ;
une couche conductrice recouvrant les parois et le fond des cavités et comprenant des portions (16, 18) de couche conductrice (10) s'étendant chacune, du côté de la face arrière, entre deux cavités, chaque portion (16, 18) de couche conductrice (10) étant partiellement située sur une protubérance (14), chaque protubérance (14) étant constituée d'une portion du substrat, la base de chaque protubérance étant incluse dans le plan de la face arrière du substrat, l'épaisseur de chaque protubérance étant comprise entre 5 et 10 fois l'épaisseur de la couche conductrice ;
un matériau isolant (12) remplissant les cavités et recouvrant la couche conductrice (10) et la face arrière de la puce, le matériau isolant (12) étant opaque et ayant une faible sélectivité de gravure par rapport au matériau de la couche conductrice (10) ; et
un circuit adapté à détecter une variation d'une caractéristique électrique mesurée entre deux plots (4, 6, 8).

2. Puce électronique selon la revendication 1, dans laquelle la longueur de chaque protubérance (14), c'est-à-dire la dimension de chaque protubérance dans une direction du plan de la face arrière du substrat, est approximativement comprise entre 10 % et 40 % de la distance séparant les cavités entre lesquelles la protubérance (14) est située.

3. Puce électronique selon la revendication 1 ou 2, dans laquelle certaines portions (18) de couche conductrice (10) sont interrompues au niveau de la partie inférieure de la protubérance (14) .

4. Puce électronique selon l'une quelconque des revendications 1 à 3, dans laquelle le circuit est adapté à mesurer la résistance entre des plots (4, 6, 8) et chaque plot est directement connecté à la couche conductrice (10).

5. Puce électronique selon l'une quelconque des revendications 1 à 4, dans laquelle le circuit est adapté à mesurer la capacité entre les plots (4, 6, 8) et chaque plot est séparé de la couche conductrice (10) par une première couche de matériau isolant.

6. Procédé de fabrication d'une puce électronique selon la revendication 1 comprenant :
a) former des plots conducteurs (4, 6, 8) sur la face avant d'un substrat semiconducteur (2) ;
b) graver, depuis la face arrière du substrat (2), des cavités en regard des plots conducteurs ;
c) graver la face arrière du substrat (2) jusqu'à ce que les cavités atteignent les plots correspondants et pour former des protubérances (14) entre des cavités, chaque protubérance (14) étant constitué d'une portion du substrat, la base de chaque protubérance étant incluse dans le plan de la face arrière du substrat ;
d) recouvrir la face arrière du substrat (2) d'une couche conductrice (10), l'épaisseur de chaque protubérance étant comprise entre 5 et 10 fois l'épaisseur de la couche conductrice ; et
e) graver la couche conductrice pour former des portions (16, 18) s'étendant chacune entre deux cavités, chaque portion étant partiellement située sur une protubérance (14),
un matériau isolant (12) remplissant les cavités et recouvrant la couche conductrice (10) et la face arrière de la puce, le matériau isolant (12) étant opaque et ayant une faible sélectivité de gravure par rapport au matériau de la couche conductrice (10).

7. Procédé selon la revendication 6, dans lequel l'étape e) de gravure de la couche conductrice (10) comprend aussi la formation de portions (18) de la couche conductrice (10) qui sont interrompues au niveau de la protubérance (14).

8. Procédé selon le revendication 6 ou 7, dans lequel une première couche de matériau isolant est déposée sur les parois et le fond des cavités entre les étapes c) et d).

## Patentansprüche

1. Ein elektronischer Chip, der Folgendes aufweist:
leitende Flächen (4, 6, 8), die sich auf der Vorderseite eines Substrats (2) aus Halbleitermaterial befinden;
Hohlräume, die von der Rückseite des Substrats (2) in das Substrat (2) geätzt sind, wobei jeder Hohlraum eine leitende Fläche (4, 6, 8) erreicht;
eine leitende Schicht, die die Wände und den Boden der Hohlräume bedeckt und Abschnitte (16, 18) der leitenden Schicht (10) aufweist, die sich jeweils auf der Rückseite zwischen zwei Hohlräumen erstrecken, wobei jeder Abschnitt (16, 18) der leitenden Schicht (10) teilweise auf einem Vorsprung (14) angeordnet ist, wobei jeder Vorsprung (14) aus einem Abschnitt des Substrats gebildet ist, wobei die Basis jedes Vorsprungs in der Ebene der Rückseite des Substrats enthalten ist, wobei die Dicke jedes Vorsprungs zwischen dem 5- und dem 10-fachen der Dicke der leitenden Schicht liegt;
ein Isoliermaterial (12), dass die Hohlräume füllt und die leitende Schicht (10) und die Rückseite des Chips bedeckt, wobei das Isoliermaterial (12) undurchsichtig ist und eine geringe Ätzselektivität gegenüber dem Material der leitenden Schicht (10) aufweist; und
eine Schaltung, die in der Lage ist, eine Änderung einer elektrischen Eigenschaft zu erfassen, die zwischen zwei leitenden Flächen (4, 6, 8) gemessen wird.

2. Elektronischer Chip nach Anspruch 1, wobei die Länge jedes Vorsprungs (14), d.h. die Abmessung jedes Vorsprungs in Richtung der Ebene der Rückseite des Substrats, ungefähr im Bereich von 10% bis 40% des Abstands liegt, der die Hohlräume trennt, zwischen denen sich der Vorsprung (14) befindet.

3. Elektronischer Chip nach Anspruch 1 oder 2, wobei bestimmte Abschnitte (18) der leitenden Schicht (10) auf der Höhe des unteren Abschnitts des Vorsprungs (14) unterbrochen sind.

4. Elektronischer Chip nach einem der Ansprüche 1 bis 3, wobei die Schaltung in der Lage ist, den Widerstand zwischen leitenden Flächen (4, 6, 8) zu messen und jede leitende Fläche direkt mit der leitenden Schicht (10) verbunden ist.

5. Elektronischer Chip nach einem der Ansprüche 1 bis 4, wobei die Schaltung in der Lage ist, die Kapazität zwischen leitenden Flächen (4, 6, 8) zu messen, und jede leitende Fläche von der leitenden Schicht (10) durch eine erste Schicht aus isolierendem Material getrennt ist.

6. Verfahren zur Herstellung eines elektronischen Chips, wobei das Verfahren Folgendes aufweist:
a) Ausbilden von leitenden Flächen (4, 6, 8) auf der Vorderseite eines Halbleitersubstrats (2);
b) Ätzen von der Rückseite des Substrats (2) her, von Hohlräumen die den leitenden Flächen gegenüberliegen;
c) Ätzen der Rückseite des Substrats (2), bis die Hohlräume die entsprechenden Flächen erreichen, und Vorsprüngen (14) zwischen den Hohlräumen bilden, wobei jeder Vorsprung (14) aus einem Teil des Substrats besteht und die Basis jedes Vorsprungs in der Ebene der Rückseite des Substrats enthalten ist
d) Bedecken der Rückseite des Substrats (2) mit einer leitenden Schicht (10), wobei die Dicke jedes Vorsprungs zwischen dem 5- und dem 10-fachen der Dicke der leitenden Schicht liegt; und
e) Ätzen der leitfähigen Schicht zur Bildung von Abschnitten (16, 18), die sich jeweils zwischen zwei Hohlräumen erstrecken, wobei jeder Abschnitt teilweise auf einem Vorsprung (14) angeordnet ist,
wobei ein Isoliermaterial (12), die Hohlräume ausfüllt und die leitende Schicht (10) und die Rückseite des Chips bedeckt, wobei das Isoliermaterial (12) undurchsichtig ist und eine geringe Ätzselektivität gegenüber dem Material der leitenden Schicht (10) aufweist.

7. Verfahren nach Anspruch 6, wobei der Schritt e) des Ätzens der leitenden Schicht (10) auch das Ausbilden von Abschnitten (18) der leitenden Schicht (10) aufweist, die auf der Höhe des Vorsprungs (14) unterbrochen sind.

8. Verfahren nach Anspruch 6 oder 7, wobei zwischen den Schritten c) und d) eine erste Schicht aus isolierendem Material auf die Wände und den Boden der Hohlräume abgeschieden wird.

## Claims

1. An electronic chip comprising:
conductive pads (4, 6, 8) located on the front side of a substrate (2) made of semiconductor material;
cavities etched into the substrate (2) from the back side of the substrate (2), each cavity reaching a conductive pad (4, 6, 8);
a conductive layer covering the walls and the bottom of the cavities and comprising portions (16, 18) of the conductive layer (10) each extending, on the back side, between two cavities, each portion (16, 18) of the conductive layer (10) being partially located on a protrusion (14), each protrusion (14) being constituted of a portion of the substrate, the base of each protrusion being included in the plan of the back side of the substrate, the thickness of each protrusion being comprised between 5 and 10 times the thickness of the conductive layer ;
an insulating material (12) fills the cavities and covers the conductive layer (10) and the back side of the chip, the insulating material (12) being opaque and having a low etch selectivity over the material of the conductive layer (10); and
a circuit capable of detecting a variation of an electric characteristic measured between two pads (4, 6, 8).

2. The electronic chip of claim 1, wherein the length of each protrusion (14), that is, the dimension of each protrusion in the direction of the plane of the back side of the substrate, is approximately in the range from 10% to 40% of the distance separating the cavities having the protrusion (14) located therebetween.

3. The electronic chip of claim 1 or 2, wherein certain portions (18) of the conductive layer (10) are interrupted at the level of the lower portion of the protrusion (14).

4. The electronic chip of any of claims 1 to 3, wherein the circuit is capable of measuring the resistance between pads (4, 6, 8) and each pad is directly connected to the conductive layer (10).

5. The electronic chip of any of claims 1 to 4, wherein the circuit is capable of measuring the capacitance between pads (4, 6, 8) and each pad is separated from the conductive layer (10) by a first layer of insulating material.

6. A method of manufacturing an electronic chip comprising:
a) forming conductive pads (4, 6, 8) on the front side of a semiconductor substrate (2);
b) etching, from the back side of the substrate (2), cavities opposite the conductive pads;
c) etching the back side of the substrate (2) until the cavities reach the corresponding pads and forming protrusions (14) between cavities, each protrusion (14) being constituted of a portion of the substrate, the base of each protrusion being included in the plan of the back side of the substrate;
d) covering the back side of the substrate (2) with a conductive layer (10), the thickness of each protrusion being comprised between 5 and 10 times the thickness of the conductive layer; and
e) etching the conductive layer to form portions (16, 18) each extending between two cavities, each portion being partially located on a protrusion (14),
an insulating material (12) filling the cavities and covering the conductive layer (10) and the back side of the chip, the insulating material (12) being opaque and having a low etch selectivity over the material of the conductive layer (10).

7. The method of claim 6, wherein step e) of etching the conductive layer (10) also comprises the forming of portions (18) of the conductive layer (10) which are interrupted at the level of the protrusion (14).

8. The method of claim 6 or 7, wherein a first layer of insulating material is deposited on the walls and the bottom of the cavities between steps c) and d).
